# EUROPEAN PATENT APPLICATION

(11) **EP 4 607 354 A1**
(43) Date of publication of application: **27.08.2025**
(21) Application number: 22965724.2
(22) Date of filing: 14.11.2022
(51) Int. Cl.: G06F 11/07

(54) **INSPECTION DEVICE, INSPECTION METHOD, AND INSPECTION PROGRAM**

(71) Applicant: NIPPON TELEGRAPH AND TELEPHONE CORPORATION, Chiyoda-ku, Tokyo 100-8116 (JP)
(72) Inventor: SATO, Ryota, Musashino-shi, Tokyo 180-8585 (JP); NAKAJIMA, Yoshiaki, Musashino-shi, Tokyo 180-8585 (JP); TAKIGUCHI, Hiroyoshi, Musashino-shi, Tokyo 180-8585 (JP)
(74) Representative: Hoffmann Eitle
(86) International application number: PCT/JP2022/042288
(87) International publication number: WO 2024/105747

(57) **Abstract**

An inspection device (100) calculates information on a difference between operation definition information including preset operation specifications of an apparatus or a system and operation data, and identifies the apparatus or the system which performs an operation different from the same kind of apparatuses or the same kind of systems on the basis of the information on the difference.

## Description

### [Technical Field]

The present invention relates to an inspection device, an inspection method, and an inspection program.

### [Background Art]

In order to check components of an apparatus or a system (parts, operations, and the like constituting an apparatus or a system, hereinafter referred to as "components") and to timely and accurately find defects and fragility, there is a growing need to disclose information on the components of the apparatus or the system (for example, information on hardware or software parts). For example, in the prior art, efforts such as Software Bill of Materials (SBOM) for standardizing the data format of information on the configuration of an apparatus or a system are known regarding a software configuration (refer to Non Patent Literature 1, for example).

### [Citation List]

### [Non Patent Literature]

[NPL 1] The Minimum Elements For a Software Bill of Materials (SBOM), https://www.ntia.doc.gov/files/ntia/publications/sbom_minimum_ elements_report.pdf

### [Summary of Invention]

### [Technical Problem]

However, in the prior art, there is a problem that unauthorized (unauthorized or inaccurate) information included in information about the configuration of an apparatus or a system cannot be detected.

Specifically, in the prior art, inspection based on accurate information on the configuration of an apparatus or a system is required in order to detect an unauthorized element included in the configuration of the apparatus or the system. However, information about the configuration of an apparatus or a system disclosed by a supplier (hereinafter referred to as a "vendor") that supplies the apparatus or the system is expressed by the vendor themselves, and thus the accuracy of the content cannot be objectively confirmed even if the format is standardized. For example, it may be difficult to eliminate the possibility that information about the configuration of an apparatus or a system includes errors, excess or deficiency, unauthorized information, and the like due to a vendor's operational mistake or malicious intent (for example, intentional information tampering, etc.).

Therefore, in inspection of the configuration of an apparatus or a system based on questionable information described above, it may be difficult to detect that an unauthorized component is included in an apparatus or a system to be inspected, that the component might provide an unauthorized function, or the like.

### [Solution to Problem]

Accordingly, in order to solve the above problems and to achieve an object, an inspection device of the present invention includes a calculation unit configured to calculate information on a difference between operation definition information including preset operation specifications of an apparatus or a system and operation data, and an identification unit configured to identify the apparatus or the system which performs an operation different from the same kind of apparatuses or the same kind of systems on the basis of the information on the difference.

### [Advantageous Effects of Invention]

The present invention has an effect that it is possible to detect unauthorized information included in information about the configuration of an apparatus or a system.

### [Brief Description of Drawings]

[Fig. 1] Fig. 1 is a diagram showing an overview of an inspection method according to the present embodiment.
[Fig. 2] Fig. 2 is a diagram showing an example of a device configuration of an inspection device according to embodiment 1.
[Fig. 3] Fig. 3 is a diagram showing an example of configuration information held in a storage unit according to embodiment 1.
[Fig. 4] Fig. 4 is a diagram showing an example of operation definition information held in the storage unit according to embodiment 1.
[Fig. 5] Fig. 5 is a diagram showing an example of difference information held in the storage unit according to embodiment 1.
[Fig. 6] Fig. 6 is a diagram showing an example of a flowchart of an inspection method according to embodiment 1.
[Fig. 7] Fig. 7 is a diagram showing an example of a device configuration of an inspection device according to embodiment 2.
[Fig. 8] Fig. 8 is a diagram showing an example of a flowchart of an inspection method according to embodiment 2.
[Fig. 9] Fig. 9 is a diagram showing an example of a device configuration of an inspection device according to embodiment 3.
[Fig. 10] Fig. 10 is a diagram showing an example of a flowchart of an inspection method according to embodiment 3.
[Fig. 11] Fig. 11 is a diagram showing an example of a computer in which an inspection device according to the present embodiment is realized.

### [Description of Embodiments]

Hereinafter, a mode for carrying out the present invention (hereinafter, "embodiment") will be described with reference to the drawings. Embodiments are not limited to content which will be described below.

### [1. Overall overview]

First, the overview of an inspection method performed by an inspection device 100 in the present embodiment will be described. The inspection device 100 provides a technique for performing an inspection for detecting that an unauthorized component included in a configuration of an apparatus or a system (for example, an unauthorized component included in the apparatus or the system, an abnormal operation caused by the unauthorized component, or the like) is included.

Specifically, the inspection device 100 assumes that information used for inspecting the configuration of the apparatus or the system is not accurate, and then calculates operation specification information obtained from information on the configuration of the apparatus or the system and difference information (for example, presence/absence of a difference in actual operation data of the apparatus or the system, the content of the difference, and the like).

In other words, the inspection device 100 compares a "prescribed operation (operation definition information including operation specifications)" assumed from configuration information including components of an apparatus or a system with actual operation (operation data) of the apparatus or the system, and identifies an apparatus or a system performing an abnormal operation and a component that causes a difference from the presence/absence of the difference and the content of the difference. Then, the inspection device 100 outputs the identified result to a terminal device 300 of a user or the like.

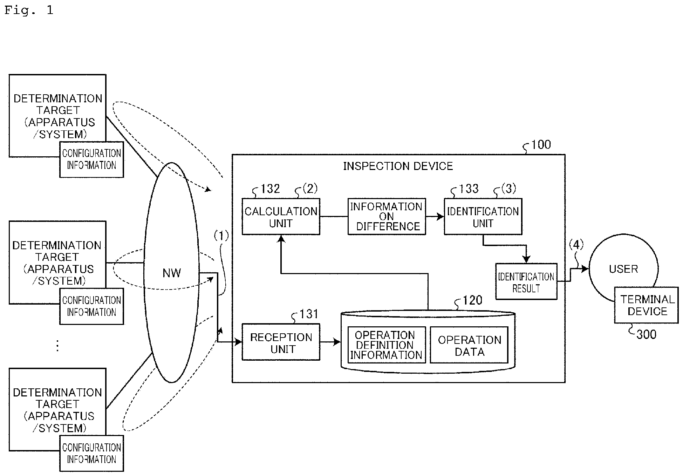

Here, an overview of an inspection method performed by the inspection device 100 will be described using Fig. 1. A reception unit 131 of the inspection device 100 shown in Fig. 1 receives operation definition information in which configuration information of a target apparatus or system is associated with operation specifications based on the configuration information, and operation data of the apparatus or the system via a network NW or the like (refer to (1) of Fig. 1). As shown in Fig. 1, a plurality of apparatuses or systems may be provided.

Then, a calculation unit 132 of the inspection device 100 compares the configuration information and the operation definition information received through the reception unit 131 with the operation data to calculate information on a difference (information 124a on presence/absence of the difference and information 124b on the content of the difference) (refer to (2) of Fig. 1).

An identification unit 133 of the inspection device 100 identifies an apparatus or a system that performs a predetermined operation (for example, an operation different from the same kind of apparatus or system) using the information on the difference, and a component that causes the difference (refer to (3) of Fig. 1). Then, the inspection device 100 outputs the identification result identified by the identification unit 133 to a terminal device 300 of a user or the like (refer to (4) of Fig. 1).

### [2. Embodiment 1]

Hereinafter, embodiment 1 of the present embodiment will be described.

### [2-1. Overview of embodiment 1]

In embodiment 1, the inspection device 100 of the present embodiment executes processing regarding a predetermined inspection. It is assumed that configuration information received by the reception unit 131 of the inspection device 100 is generated in advance by a vendor of an apparatus or a system to be determined.

The reception unit 131 receives the above-described operation definition information in which the configuration information is associated with operation specifications based on the configuration information, and operation data. The timing and method for the reception unit 131 to receive the above-described information are not limited. Then, a calculation unit 132 compares the operation definition information with the operation data to calculate information on a difference in the target apparatus or system (information 124a on presence/absence of the difference and information 124b on the content of the difference).

An identification unit 133 compares the information on the difference calculated by the calculation unit 132 (the information 124a on presence/absence of the difference and the information 124b on the content of the difference) with information on differences in the same kind of apparatuses or the same kind of systems, and identifies an apparatus or a system that performs an unusual operation (for example, an operation in which a tendency of presence/absence of a difference or the content of the difference is significantly different).

Further, the identification unit 133 identifies a component related to operation specifications corresponding to the operation which causes the difference on the basis of the operation definition information. Then, an output unit 134 outputs information on the apparatus or the system which has performed the abnormal operation and the corresponding component to the terminal device 300 of a user or the like on the basis of the identification result of the identification unit 133.

### [2-2. Configuration of inspection device]

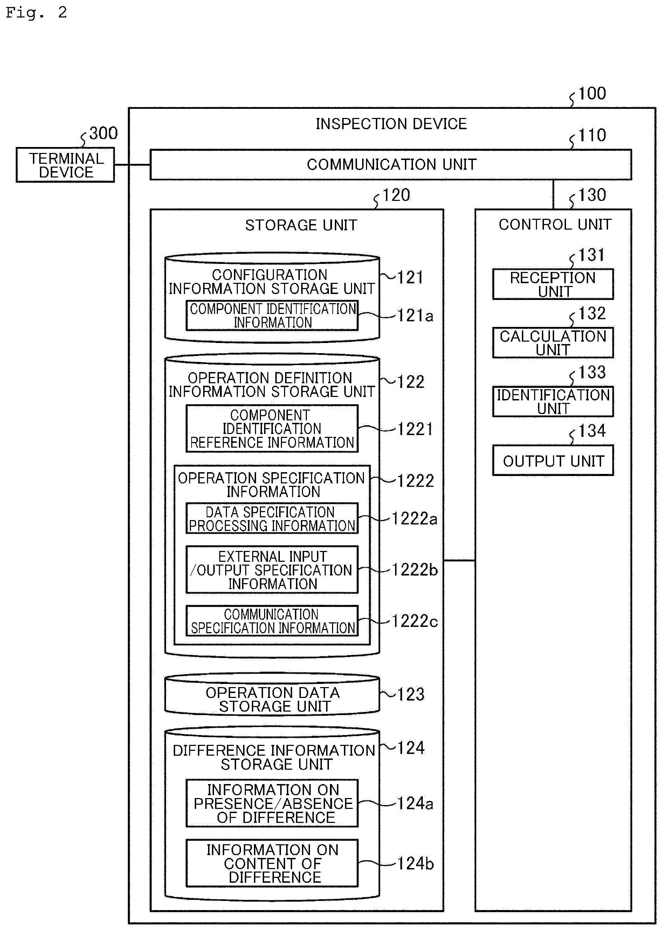

Hereinafter, the configuration of the inspection device 100 according to embodiment 1 will be described using Fig. 2. As shown in Fig. 2, the inspection device 100 includes a communication unit 110, a storage unit 120, and a control unit 130 and communicates with an external device and the like (e.g., the terminal device 300 and the like). Although not shown, the inspection device 100 may include an input unit (e.g., a keyboard, a mouse, or the like) which receives various operations, and a display unit (e.g., a display or the like) which displays various types of information. Subsequently, detailed functions of each unit will be described below.

### (Communication unit 110)

The communication unit 110 is realized by a network interface card (NIC) or the like and controls communication via a telecommunication line such as a local area network (LAN) or the Internet. In addition, the communication unit 110 is connected to a network by wire or wirelessly as necessary, and is capable of bi-directionally transmitting and receiving information. In the present embodiment, it is assumed that communication between the inspection device 100 and an external device (for example, the terminal device 300 or the like) is performed via the communication unit 110.

### (Storage unit 120)

The storage unit 120 stores programs and data necessary for various kinds of processing performed by the control unit 130. Further, the storage unit 120 includes a configuration information storage unit 121, an operation definition information storage unit 122, an operation data storage unit 123, and a difference information storage unit 124. The storage unit 120 is realized by a semiconductor memory element such as a random access memory (RAM) or a flash memory, or a storage device such as a hard disk or an optical disc.

### (Configuration information storage unit 121)

The configuration information storage unit 121 stores configuration information including components with respect to the configuration of an apparatus or a system. Specifically, the configuration information storage unit 121 stores configuration information including components of hardware and software constituting an apparatus or a system. For example, the configuration information storage unit 121 may store model numbers and serial numbers of parts as configuration information with respect to hardware parts.

Further, the configuration information storage unit 121 stores, for example, package names, file names, attribute information associated therewith, and the like as configuration information with respect to software parts. The configuration information storage unit 121 may also store data of a package management system of an OS and information described in the SBOM of the prior art, or the like.

Additionally, the above-mentioned components represent those constituting various objects from large to small. A component of a "system" is, for example, a component of an apparatus (e.g., a terminal, a server, a network apparatus, or the like) constituting the system. On the other hand, a component of an "apparatus" corresponds to a hardware part or a software part constituting the apparatus, for example.

Further, the above-mentioned hardware part and software part may be composed of smaller software parts and hardware parts. However, a hardware part mentioned here may be a mixture of a hardware part and a software part, whereas a software part does not include a hardware part.

### (Component identification information 121a)

In addition, the configuration information storage unit 121 stores component identification information 121a which is information for identifying a component. The component identification information 121a is identification information assigned to each component included in configuration information of an apparatus or a system. The configuration information storage unit 121 does not limit the format of the component identification information 121a, and can store information that can be used as identification information such as text and numerical values.

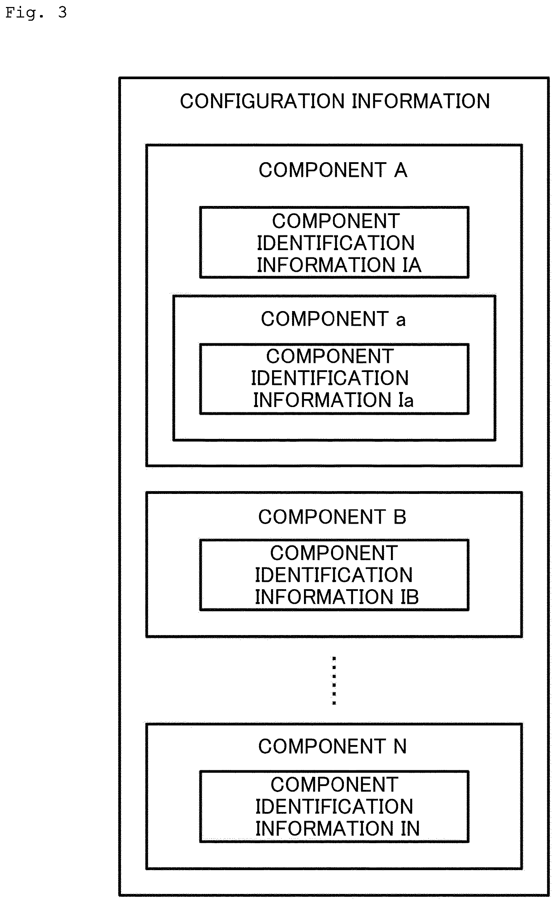

Here, a structure of configuration information stored in the configuration information storage unit 121 will be described using Fig. 3. As shown in Fig. 3, the structure information includes a plurality of components such as component A, component B, ..., and component N. In addition, as shown in Fig. 3, the component can have a multi-stage hierarchical structure, and one parent (component A) may include one or more children (component a).

Further, the structure information includes component identification information 121a for each component, and in Fig. 3, component A includes "component identification information IA," component a includes "component identification information Ia," component B includes "component identification information IB," ..., and component N includes "component identification information IN," for example. The number of pieces of configuration information stored in the configuration information storage unit 121 is not limited.

### (Operation definition information storage unit 122)

Referring back to Fig. 2, description will continue. The operation definition information storage unit 122 stores, as operation definition information, component identification reference information 1221 and operation specification information 1222 (data processing specification information 1222a, external input/output specification information 1222b, and communication specification information 1222c).

### (Component identification reference information 1221)

The operation definition information storage unit 122 stores the component identification reference information 1221 for defining a component as an association destination. The component identification reference information 1221 is information used by referring to component identification information 121a given to each component included in configuration information of an apparatus or a system, and is information for associating a target component with operation definition information. The operation definition information storage unit 122 does not limit the format of the component identification reference information 1221, and can store information that can be used as identification information such as text and numerical values.

### (Operation specification information 1222)

The operation definition information storage unit 122 stores each element constituting configuration information and operation specification information 1222 brought by the element. The operation specification information 1222 is information for previously defining a relationship between data processing specification information 1222a, external input/output specification information 1222b, communication specification information 1222c, and the like in an apparatus or a system.

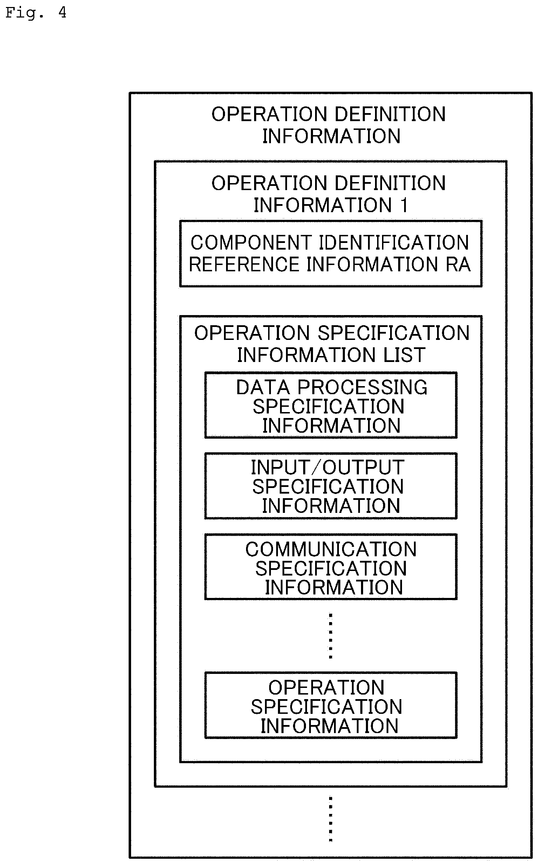

Here, a structure of operation definition information stored in the operation definition information storage unit 122 will be described using Fig. 4. As shown in Fig. 4, the operation definition information 1 is composed of "component identification reference information 1221 (component identification reference information RA in Fig. 4)" for defining a component as an association destination and an operation specification information list associated with the component. Further, the operation specification information list is information including one or more of data processing specification information, input/output specification information, communication specification information, and the like, and may include different kinds of information (for example, data processing specification information and input/output specification information) or include a plurality of the same kinds of information (for example, two or more pieces of communication specification information that differ in content), and the number and kinds of information included therein are not limited. In addition, the operation definition information can be defined in association with any component of a multi-stage hierarchical structure.

Further, the operation definition information need not be comprehensively created for all components, and a component that is not associated with the operation definition information may be present. For a component in this case, the operation is not inspected using the operation definition information, and only an inspection based on configuration information including the component is performed.

The operation definition information storage unit 122 may store operation definition information directly defined by a manual operation, or may store operation definition information including, as operation specification information, a learning model generated by machine learning of receiving information regarding components and operation data (for example, information on an actual operation of an apparatus or a system represented by an operation log, a communication log, and the like) as input.

### (Data processing specification information 1222a)

Referring back to Fig. 2, description will continue. The operation definition information storage unit 122 stores information on the internal operation in an apparatus or a system as data processing specification information 1222a included in the operation specification information 1222. For example, the operation definition information storage unit 122 stores information including operation content or the like recorded in an operation log as data processing specification information 1222a.

Specifically, the data processing specification information 1222a includes specification information related to "log data," "data file," and "memory." For example, "log data" is information in which operation content is recorded in a write-once type by an apparatus or a system according to operation, and specifies a storage location, a format, a structure of records to be written, variations in record content, relationships between records including the order thereof, and the like.

For example, the "data file" is used for an operation of an apparatus or a system and is created, updated and deleted according to the operation, and specifies a storage location, a format, a data structure, variations in data content, and the like. For example, the "memory" is an area in which predetermined data is held by an apparatus or a system according to an operation, and specifies information indicating the position of the memory, a structure of data to be written, variations in content, and the like.

The aforementioned "log data," "data file," and "memory" may be implemented by either hardware or software. Further, the data processing specification information 1222a may include not only single operations equivalent to so-called CRUD (e.g., create, read, update, delete, etc.) but also specifications based on operation patterns (e.g., amount, speed, frequency, etc.). The operation definition information storage unit 122 can store information other than the information described above without limitation if the information is the category of the information related to the internal operation as the data processing specification information 1222a.

### (External input/output specification information 1222b)

The operation definition information storage unit 122 stores information on input/output specifications with respect to an interface provided in a component of an apparatus or a system as external input/output specification information 1222b included in the operation specification information 1222. For example, the operation definition information storage unit 122 stores information on the kind of an interface and the content of input/output data corresponding to the kind of a device or a component of an apparatus or a system as external input/output specification information 1222b.

Specifically, the external input/output specification information 1222b includes specification information on a "communication interface," a "screen output interface," an "audio input/output interface," and a "keyboard input interface." For example, the "communication interface" is defined by device information, a transmission destination and a reception source (e.g., addresses, communication ports, etc.), the structure and content of communication data, a communication pattern (e.g., quantity, speed, frequency, etc.), and the like.

For example, the "screen output interface" is defined by device information, display content, a display pattern (for example, quantity, speed, frequency, etc.). For example, the "audio input/output interface" is defined by device information, input/output content (e.g., voice waveform data conditions, etc.), input/output patterns (for example, quantity, speed, frequency, etc.). For example, the "keyboard input interface" is defined by device information, input content, an input pattern (e.g., quantity, speed, frequency, etc.).

The input/output interface mentioned here includes, for example, USB, RS-232C, IEEE 1394, SCSI, HDMI (registered trademark), DVI, Serial-ATA, Bluetooth (registered trademark), IrDA, NFC, Wi-Fi, and the like. Further, the operation definition information storage unit 122 can store information other than the aforementioned information without limitation if it is in the category of information on input/output specifications with respect to an interface provided in a component of an apparatus or a system as the external input/output specification information 121b.

### (Communication specification information 1222c)

The operation definition information storage unit 122 stores information on operations with respect to communication of an apparatus or a system as communication specification information 1222c included in the operation specification information 1222. For example, the operation definition information storage unit 122 stores, as communication specification information 1222c, information on operations with respect to communication defined by a communication protocol name, a port number, transmission/reception addresses of a communication apparatus, and the like, which is a kind of input/output specifications. The operation definition information storage unit 122 can store information other than the aforementioned information without limitation if it is in the category of information on operations with respect to communication of an apparatus or a system as the communication specification information 1222c.

### (Operation data storage unit 123)

The operation data storage unit 123 stores, as operation data, information on an actual operation represented by an operation log, a communication log, and the like of an apparatus or a system to be inspected. The operation data storage unit 123 can store, as operation data, information other than the aforementioned information without limitation if it is in the category of information on an actual operation of an apparatus or a system to be inspected.

### (Difference information storage unit 124)

The difference information storage unit 124 stores information on a difference calculated by the calculation unit 132. Specifically, the difference information storage unit 124 stores, as information on a difference, information 124a on presence/absence of the difference and information 124b on the content of the difference.

The information 124a on presence/absence of a difference mentioned here is information on presence/absence of a difference between operation definition information calculated by the calculation unit 132 and operation data of an apparatus or a system. For example, the information 124a on presence/absence of a difference includes information such as "presence of a difference" when there is a difference between the operation definition information and the operation data. On the other hand, the information 124a on presence/absence of the difference includes information such as "absence of a difference" when there is no difference between the operation definition information and the operation data.

The information 124b on the content of a difference is information on the content of a difference between the operation definition information calculated by the calculation unit 132 and the operation data of the apparatus or the system. For example, the information 124b on the content of a difference is information on differences in predetermined operations, processing, and the like between operation data (e.g., an operation log, a communication log, and the like) and operation specifications defined by operation definition information (e.g., specifications of data processing, input/output data, communication data, and the like).

As a specific example, the information 124b on the content of a difference may include a "detection date and time," a "component ID," a "difference specification ID," "difference data," and the like. The detection date and time is information on a date and time at which a difference is detected and is information indicating a specific point in time or period, for example.

The component ID is an ID (identification information) for identifying a component in which a difference has been detected. The difference specification ID is an ID (identification information) for identifying a specification that shows mismatch with an actual operation (e.g., deviation between the specification information and the actual operation) among specifications included in the aforementioned operation definition information of a component (e.g., conditions that define the specifications, rules, a learning model by machine learning, etc.). The difference data includes, as the content of a difference, corresponding specification information, a record of an operation log with respect to an unmatched actual operation, input/output data and the like, data obtained by compressing or summarizing them, and the like.

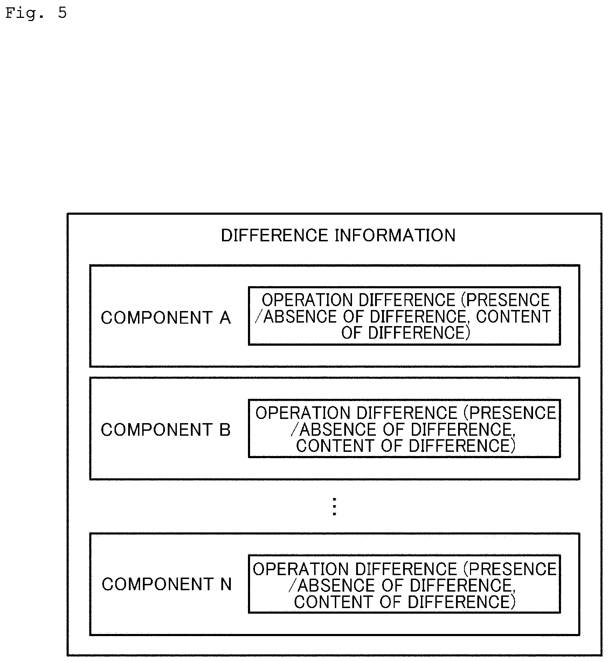

Here, a structure of information on a difference stored in the difference information storage unit 124 will be described using Fig. 5. As shown in Fig. 5, information on a difference includes presence/absence of a difference (for example, information 124a on presence/absence of a difference) and the content of the difference (for example, information 124b on the content of the difference) as an operation difference for each component. The difference information storage unit 124 may store information on a difference for each of a plurality of components. Further, the difference information storage unit 124 may store information on differences collected from a plurality of apparatuses or systems. Further, the difference information storage unit 124 can store information other than the aforementioned information without limitation if it is in the category of information on a difference.

### (Control unit 130)

Referring back to Fig. 2, description will continue. The control unit 130 includes a reception unit 131, a calculation unit 132, an identification unit 133, and an output unit 134. In addition, the control unit 130 has an internal memory for temporarily storing programs and processing data that define various processing procedures, and the like, and is realized by an electronic circuit such as a central processing unit (CPU) or a micro processing unit (MPU), or an integrated circuit such as an application specific integrated circuit (ASIC) or a field programmable gate array (FPGA).

### (Reception unit 131)

The reception unit 131 receives, by a predetermined method, operation definition information in which configuration information generated in advance by a vendor of an apparatus or a system to be determined is associated with operation specifications based on the configuration information, and operation data as information on an actual operation of an apparatus or a system to be inspected. The reception unit 131 may receive information in association with an apparatus or a system, in advance, or at a predetermined timing, for example, and the reception timing is not limited. Further, the reception unit 131 may acquire corresponding information from a predetermined external device or the like, receive information transmitted from a predetermined external device or the like, or receive information input manually by a user or the like, as a predetermined reception method, and the reception method is not limited.

### (Calculation unit 132)

The calculation unit 132 calculates information on a difference between operation definition information including preset operation specifications of an apparatus or a system and operation data. Specifically, the calculation unit 132 compares operation definition information in which configuration information including components with respect to the configuration of an apparatus or a system is associated with operation specifications based on the components with operation data that is information on an actual operation of the apparatus or the system, and calculates information 124a on presence/absence of a difference between the operation specifications and the operation data and information 124b on the content of the difference between the operation specifications and the operation data as information on the difference.

For example, when there is a difference between the operation definition information and the operation data, the calculation unit 132 calculates the information 124a on presence/absence of the difference such as "presence of a difference," and compares operation data (for example, an operation log, a communication log, and the like) of the apparatus or the system with operation specifications (for example, specifications of data processing, input/output data, communication data, and the like) defined by the operation definition information to calculate the information 124b on the content of the generated difference.

When a plurality of pieces of operation definition information are stored in the operation definition information storage unit 122, the calculation unit 132 can calculate information on a difference between any of the plurality of pieces of operation definition information and operation data as an OR condition operation. On the other hand, the calculation unit 132 can calculate information on differences between all of the plurality of pieces of operation definition information and the operation data as an AND condition operation. Further, the calculation unit 132 can switch which condition is to be used for calculation of information on a difference based on the aforementioned OR condition operation or AND condition operation.

The calculation unit 132 may receive configuration information, operation definition information, and operation data of an apparatus or a system, and calculate information on matching between operation definition information corresponding to the configuration information and an actual operation of the apparatus or the system (information on a difference).

### (Identification unit 133)

The identification unit 133 identifies an apparatus or a system that performs an operation different from the same kind of apparatuses or the same kind of systems on the basis of information on a difference. Specifically, the identification unit 133 identifies an apparatus or a system that performs an operation different from the same kind of apparatuses or the same kind of systems as a predetermined operation using information on differences between the apparatus or the system and the same kind of apparatuses or the same kind of systems, acquired in advance.

Further, the identification unit 133 identifies a component that causes a difference using the information on differences between the apparatus or the system and the same kind of apparatuses or the same kind of systems, acquired in advance. Specifically, the identification unit 133 compares the aforementioned information on a difference between the same kind of apparatuses or systems with respect to information on differences collected from a plurality of apparatuses or systems, and identifies a component of an apparatus or a system that causes an operation different from the same kind of apparatuses or the same kind of systems as an identification result of a predetermined operation performed by the identification unit 133.

For example, when a difference that "a storage location of predetermined data is different between an operation specification and an actual operation" has occurred, the identification unit 133 can identify a component (e.g., a program performing the aforementioned processing, or the like) related to an "operation of storing (saving) specified data in a specified location in a specified format" as a component that causes the difference on the basis of "log data (operation content recorded by an apparatus or a system in a write-one type manner according to an operation, for example, information that specifies a storage location, a format, a structure of records to be written, variations in record content, and relationships between records, including the order thereof, and the like)" defined in data processing specification information 1222a as operation definition information.

Here, an "operation satisfying a predetermined condition" mentioned here is a condition that can be arbitrarily set, and the conditions may be set without any particular limitation, such as "performing an operation different from those of other apparatuses or systems" or "not performing a predetermined operation," for example. Further, the identification unit 133 can identify, as a component that causes the difference to be identified, a component without being limited to the above description if it is in the category of components included in an apparatus or a system to be inspected.

Here, processing performed by the identification unit 133 will be further described. The identification unit 133 analyzes a tendency of difference content using information on differences collected or accumulated transversely from a plurality of apparatuses or systems. For example, when the content or occurrence pattern (e.g., frequency, combination, and the like) of a difference that occurs in a specific entity (apparatus or system) does not occur in a plurality of entities of the same kind, the identification unit 133 regards the content or generation pattern as "specific" and identifies the entity.

Further, the identification unit 133 not only determines specificity from a single difference occurring at a certain point in time in each entity, but also can extract specificity in consideration of relationships such as a combination of a plurality of differences that occur simultaneously, or a chronological correlation of a plurality of differences that occur over a certain period of time (for example, order, dependency, and the like).

### (Output unit 134)

The output unit 134 outputs an identification result of the identification unit 133. Specifically, the output unit 134 can output the identification result of the identification unit 133 to a terminal device 300 or the like of a predetermined user or vendor. The aforementioned predetermined user or vendor may be a single user or vendor or a plurality of users or vendors.

Further, the output format of results output by the output unit 134 is not particularly limited. For example, the output unit 134 can output information in any format as long as the information can be perceived by a user using the five senses (for example, visual information such as text and figures, and audio information).

### (Terminal device 300)

The terminal device 300 receives an inspection result output by the output unit of the inspection device 100, and displays the inspection result to a user or the like (for example, an inspector, an apparatus or a system operator, an apparatus or system vendor, or the like). The terminal device 300 may be, for example, an information processing device such as a desktop PC, a tablet PC, a laptop computer, a mobile phone, a smartphone, or a personal digital assistant (PDA), or a form of an information processing device may be selected as necessary.

### [2-3. Processing procedure]

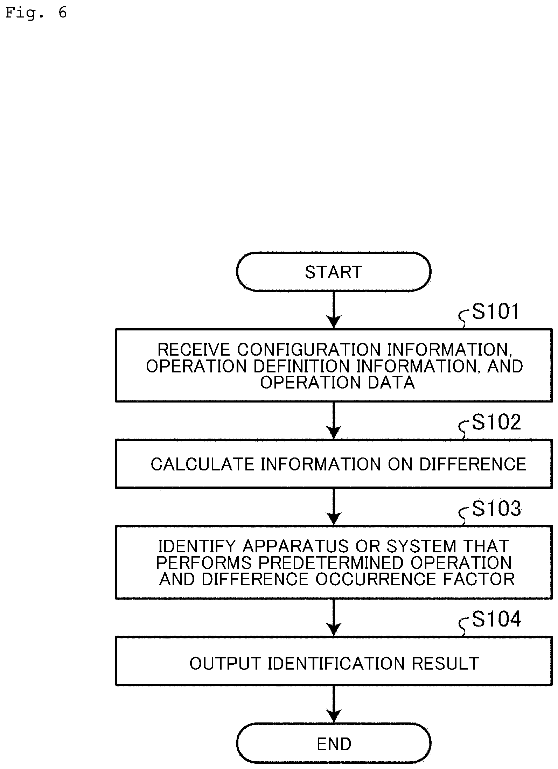

Hereinafter, an inspection procedure of the inspection device 100 according to embodiment 1 will be described using Fig. 6. First, the reception unit 131 receives configuration information, operation definition information, and operation data (step S101). The calculation unit 132 calculates information on a difference on the basis of the operation definition information and the operation data received by the reception unit 131 (step S102). The calculation unit 132 may calculate information 124a on presence/absence of a difference and information 124b on the content of the difference as information on a difference.

The identification unit 133 identifies an apparatus or a system that performs a predetermined operation and a component that causes the difference on the basis of the information on the difference (step S103). Then, the output unit 134 outputs an identification result to a terminal device 300 of a user or the like (step S104), and the process ends.

### [3. Embodiment 2]

Hereinafter, embodiment 2 in the present embodiment will be described.

### [3-1. Overview of embodiment 2]

In embodiment 2, the operation definition information storage unit 122 that stores operation definition information is implemented separately from the inspection device 100 and is operated in association with a plurality of inspection devices 100. In other words, in embodiment 2, the operation definition information storage unit 122 is implemented in an external storage device (external storage device 200 or the like) other than the inspection device 100, and operation definition information is stored in the external storage device. Accordingly, the operation definition information can be shared among respective inspection devices 100, and the operation definition information can be more efficiently created and stored.

### [3-2. Configuration of inspection device]

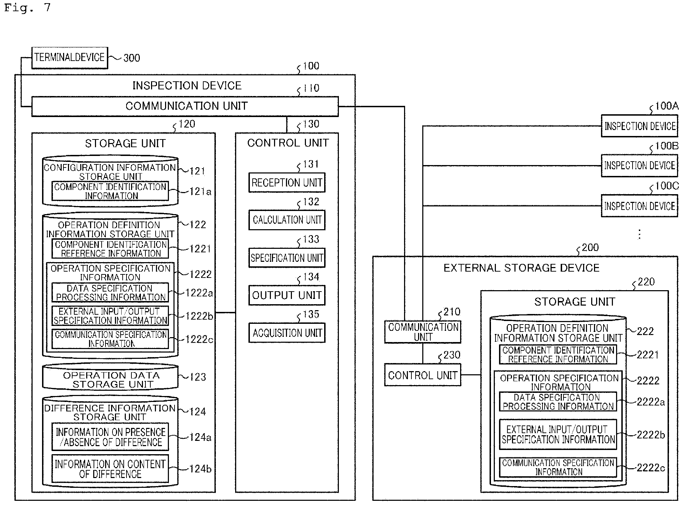

Next, the configuration of the inspection device 100 according to embodiment 2 will be described using Fig. 7. The inspection device 100 in embodiment 2 includes a communication unit 110, a storage unit 120, and a control unit 130 as the same components as in embodiment 1, and communicates with an external device and the like (e.g., an external storage device 200, a terminal device 300, and the like). Since the inspection device 100 in embodiment 2 can be realized in the same configuration as the inspection device 100 of embodiment 1 except for the operation definition information storage unit 122 and the acquisition unit 135, detailed description thereof is omitted.

### (Operation definition information storage unit 122)

The operation definition information storage unit 122 stores component identification reference information 1221 and operation specification information 1222 (data processing specification information 1222a, external input/output specification information 1222b, and communication specification information 1222c). The operation definition information storage unit 122 of embodiment 2 may store information acquired in advance or store information acquired from the external storage device 200 with respect to the component identification reference information 1221 and the operation specification information 1222 (the data processing specification information 1222a, the external input/output specification information 1222b, and the communication specification information 1222c).

### (Acquisition unit 135)

The acquisition unit 135 acquires operation definition information from a predetermined external storage device 200. Specifically, the acquisition unit 135 of embodiment 2 acquires operation definition information (for example, data processing specification information 2222a, external input/output specification information 2222b, and communication specification information 2222c included in operation definition information in which component identification information 121a of a component to be inspected matches component identification reference information 2221) related to an apparatus or a system to be inspected from operation definition information stored in the external storage device 200 in a state in which a plurality of inspection devices 100 can commonly use the operation definition information.

### [3-3. Configuration of external storage device]

Subsequently, the configuration of the external storage device 200 in embodiment 2 will be described. The external storage device 200 in embodiment 2 includes a communication unit 210, a storage unit 220, and a control unit 230. In addition, the external storage device 200 communicates with a communication unit of each of the plurality of inspection devices 100 (for example, inspection device 100, inspection device 100A, inspection device 100B, and inspection device 100C in Fig. 7) via the communication unit 210. Although the inspection device 100, the inspection device 100A, the inspection device 100B, and the inspection devices 100C are described in Fig. 7, the number of inspection devices is not limited to the number described.

### (Communication unit 210)

The communication unit 210 of the external storage device 200 in embodiment 2 is realized by an NIC or the like, and controls communication via electric communication lines such as a LAN and the Internet. The communication unit 210 is connected to a network by wire or wirelessly as necessary, and is capable of bi-directionally transmitting and receiving information. In embodiment 2, it is assumed that communication with the plurality of inspection devices 100 is performed via the communication unit 210.

### (Storage unit 220)

The storage unit 220 stores programs and data necessary for various kinds of processing of the control unit 230. In addition, the storage unit 220 is realized by a semiconductor memory element such as a RAM or a flash memory, or a storage device such as a hard disk or an optical disc.

In addition, the storage unit 220 includes an operation definition information storage unit 222. In embodiment 2, the operation definition information storage unit 222 is present as a functional unit similar to the operation definition information storage unit 122 of embodiment 1. Since the operation definition information storage unit 222 can be realized with the same function as the operation definition information storage unit 122 of embodiment 1, detailed description thereof is omitted.

### (Control unit 230)

The control unit 230 has an internal memory for temporarily storing programs and processing data defining various processing procedures and the like, and is realized by an electronic circuit such as a CPU or an MPU, or an integrated circuit such as an ASIC or an FPGA. In addition, the control unit 230 realizes functions necessary for the external storage device 200 of embodiment 2 to execute predetermined processing.

### [3-4. Processing procedure]

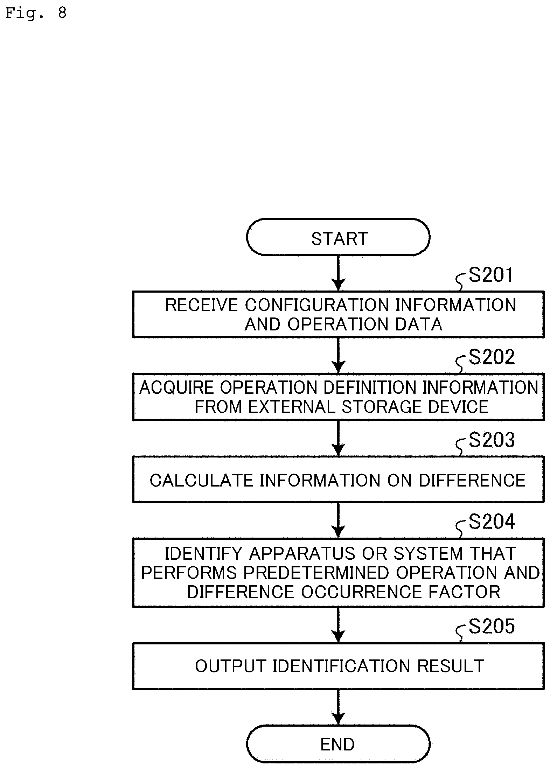

Hereinafter, an inspection procedure of the inspection device 100 according to embodiment 2 will be described using Fig. 8. The reception unit 131 receives configuration information and operation data (step S201). Next, the acquisition unit 135 acquires operation definition information (for example, component identification reference information 2221, data processing specification information 2222a, external input/output specification information 2222b, and communication specification information 2222c) from the external storage device 200 (step S202). The order of steps S201 and S202 is not limited, and may be reversed as necessary.

The calculation unit 132 calculates information on a difference on the basis of the operation definition information acquired by the acquisition unit 135 and the operation data received by the reception unit 131 (step S203). For example, the calculation unit 132 may calculate information 124a on presence/absence of a difference and information 124b on the content of the difference as information on a difference.

The identification unit 133 identifies an apparatus or a system that performs a predetermined operation and a component that causes the difference on the basis of the information on the difference (step S204). Then, the output unit 134 outputs an identification result to a terminal device 300 of a user or the like (step S205), and the process ends.

### [4. Embodiment 3]

Hereinafter, embodiment 3 in the present embodiment will be described.

### [4-1. Overview of embodiment 3]

In embodiment 3, the difference information storage unit 124 is implemented separately from the inspection device 100 and operated in association with a plurality of inspection devices 100. In other words, in embodiment 3, the difference information storage unit 124 is implemented in an external storage device 200 other than the inspection device 100, and information on a difference (for example, information 224a on presence/absence of the difference, information 224b on the content of the difference) is stored in the external storage device 200. Accordingly, information on a difference can be shared among the plurality of inspection devices 100, operation definition information can be created and accumulated more efficiently, and the information on the difference can be shared.

Further, when information on a difference stored in the difference information storage unit 224 of the external storage device 200 is continuously confirmed in common in other apparatuses or systems, the inspection device 100 determines that the aforementioned operation is normal and updates the operation definition information such that the same difference does not occur.

### [4-2. Configuration of inspection device]

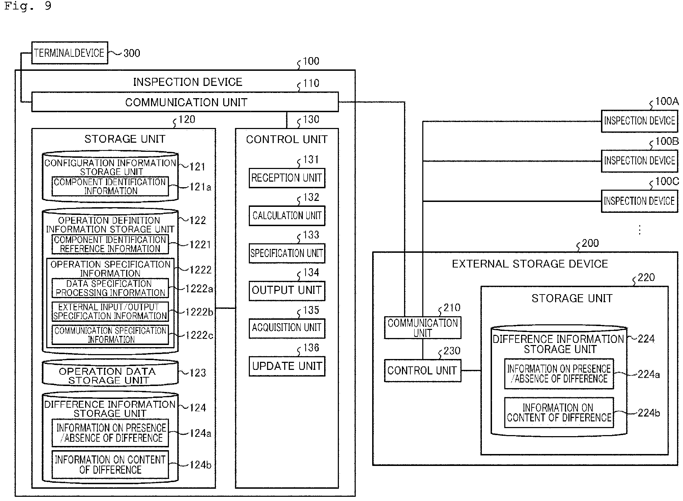

Next, the configuration of the inspection device 100 according to embodiment 3 will be described using Fig. 9. The inspection device 100 according to embodiment 3 includes a communication unit 110, a storage unit 120, and a control unit 130 as the same components as in embodiment 1 and embodiment 2, and communicate with an external device and the like (for example, an external storage device 200, a terminal device 300, and the like).

Since the inspection device 100 in embodiment 3 can be realized with the same configuration as the inspection devices 100 of embodiment 1 and embodiment 2 except for the difference information storage unit 124, the acquisition unit 135, and an update unit 136, detailed description thereof is omitted.

### (Difference information storage unit 124)

The difference information storage unit 124 stores information on a difference calculated by the calculation unit 132. Specifically, the difference information storage unit 124 stores, as information on a difference, information 124a on presence/absence of the difference and information 124b on the content of the difference.

The difference information storage unit 124 of embodiment 3 may store information acquired in advance or may store information acquired from the external storage device 200 with respect to the information 124a on presence/absence of the difference and the information 124b on the content of the difference.

### (Acquisition unit 135)

The acquisition unit 135 acquires information on a difference from a predetermined external storage device 200. Specifically, the acquisition unit 135 of embodiment 3 acquires information on a difference related to an apparatus or a system to be inspected and information on differences related to the same kind of apparatuses or the same kind of systems from information on differences (for example, information 224a on presence/absence of differences and information 224b on the content of the differences) stored in the external storage device 200 in a state in which a plurality of inspection devices 100 can commonly use the information.

### (Update unit 136)

The update unit 136 updates the operation definition information when information on a difference calculated by the calculation unit 132 and information on a difference in an apparatus or a system and the same kind of apparatuses or the same kind of systems satisfy predetermined conditions.

For example, the update unit 136 compares information on a difference in an apparatus or a system (information 124a on presence/absence of the difference and information 124b on the content of the difference) with information on differences in the same kind of apparatuses or the same kind of systems (for example, information 224a on presence/absence of differences and information 224b on the content of the differences), and when a difference is continuously confirmed as a difference in common in any of the same kind of apparatuses or systems, can determine that the difference is normal and update the operation definition information such that the difference does not occur.

### [4-3. Configuration of external storage device]

Subsequently, the configuration of the external storage device 200 in embodiment 3 will be described. The external storage device 200 in embodiment 3 includes a communication unit 210, a storage unit 220, and a control unit 230. Since the external storage device 200 in embodiment 3 can be realized with the same configuration as the external storage device 200 of embodiment 2 except for the difference information storage unit 224, detailed description thereof is omitted.

In addition, the external storage device 200 communicates with a communication unit of each of the plurality of inspection devices 100 (for example, inspection device 100, inspection device 100A, inspection device 100B, and inspection device 100C in Fig. 9) via the communication unit 210. Although the inspection device 100, the inspection device 100A, the inspection device 100B, and the inspection devices 100C are described in Fig. 9, the number of inspection devices is not limited to the number described.

### (Difference information storage unit 224)

In embodiment 3, the difference information storage unit 224 is present as a functional unit similar to the difference information storage unit 124 of embodiment 1. Since the difference information storage unit 224 can be realized with the same function as the difference information storage unit 124 of embodiment 1, detailed description thereof is omitted.

### [4-4. Processing procedure]

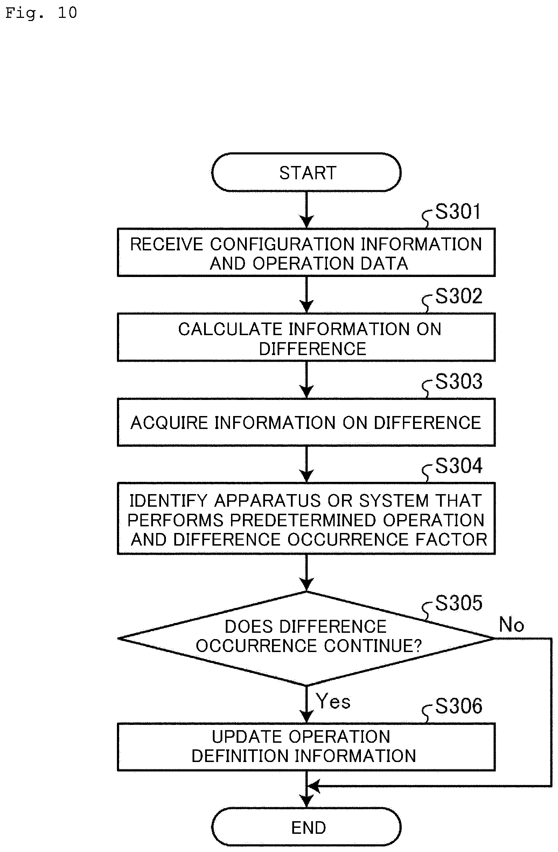

Hereinafter, an inspection procedure of the inspection device 100 according to embodiment 3 will be described using Fig. 10. First, the reception unit 131 receives configuration information and operation data (step S301). Next, the calculation unit 132 calculates information on a difference on the basis of operation definition information and the operation data received by the reception unit 131 (step S302).

The calculation unit 132 may calculate information 124a on presence/absence of a difference and information 124b on the content of the difference as the information on the difference. Further, the inspection device 100 may store information on the difference in the difference information storage unit 124 of the inspection device 100 or transmit the information to the external storage device 200 and cause the difference information storage unit 224 of the external storage device 200 to store the information on the difference.

The acquisition unit 135 acquires information on differences (for example, information 224a on presence/absence of differences and information 224b on the content of the differences) in the same kind of apparatuses or systems from the external storage device 200 (step S303). The order of steps S301, S302, and S303 is not limited, and may be changed as necessary.

The identification unit 133 identifies an apparatus or a system that performs a predetermined operation and a component that causes a difference on the basis of the information on differences acquired from the external storage device 200 through the acquisition unit 135 (step S304). Then, the update unit 137 determines that occurrence of a difference continues (Yes in step S305).

In this case, the update unit 137 updates the operation definition information (step S306), and the process ends. For example, the update unit 136 compares information on a difference (information 124a on presence/absence of a difference and information 124b on the content of the difference) with information on differences in the same kind of apparatuses or the same kind of systems (for example, information 224a on presence/absence of differences and information 224b on the content of the differences), and when a difference is continuously confirmed as a difference in common in any of the same kind of apparatuses or systems, can determine that the difference is normal and update the operation definition information such that the difference does not occur.

On the other hand, the update unit 137 determines that occurrence of a difference does not continue (No in step S305). In this case, the process ends as it is. For example, when information on a difference (information 124a on presence/absence of the difference and information 124b on the content of the difference) is not confirmed as a difference in common and continuously in any of the same kind of apparatuses or systems, the update unit 136 may perform an operation of determining that the difference is abnormal and not updating the operation definition information.

### [5. Effects]

The effects provided by the inspection device 100 of the present embodiment will be described in the following items. The inspection device 100 according to the present embodiment calculates information on a difference between operation definition information including preset operation specifications of an apparatus or a system and operation data, and identifies an apparatus or a system that performs an operation different from the same kind of apparatuses or the same kind of systems on the basis of the information on the difference. Therefore, according to the present embodiment, the following effects can be obtained.

The inspection device 100 can flexibly inspect presence/absence of a difference and the content of the difference for each of various hierarchies, and can identify minute singularity by collecting determination results from a plurality of apparatuses or systems and performing cross-sectional analysis.

The inspection device 100 provides an effect of detecting that configuration information provided from a vendor includes an inaccurate or unauthorized component if an operation related to a difference is not assumed by a user as information on the difference.

The inspection device 100 provides an effect of comparing configuration information of an apparatus or a system with an actual operation to extract information on a difference and comparing the information on the difference with information on differences in the same kind of apparatuses or systems to detect an abnormal operation even when the configuration information is not accurate, and identifying a component that causes the abnormal operation.

The inspection device 100 provides an effect of detecting possible operational errors or falsification by a creator (e.g., a vendor) of configuration information that causes an unexpected operation by discovering the configuration information on the basis of information on differences.

The inspection device 100 provides an effect of generating a curbing effect for reducing the possibility of operational errors or falsification by monitoring a plurality of users or the like. Further, the inspection device 100 provides an effect of making it possible to share the fact that an abnormality is not continuously detected, thereby strengthening trust in a vendor that supplies such an apparatus or a system.

### [6. Hardware configuration]

Component of each device shown in the drawings are functional concepts and do not necessarily need to be physically configured in the same way as shown in the drawings. That is, a specific form of distribution and integration of devices is not limited to the illustrated one, and all or a part thereof may be functionally or physically distributed or integrated on any unit basis in accordance with various loads and usage conditions. Furthermore, all or some of processing functions performed by the devices may be realized by a CPU and a program that is analyzed and executed by the CPU, or may be realized as hardware using wired logic.

Further, among processing described in the present embodiment, all or part of processing described as being performed automatically can also be performed manually by a known method. In addition, information including processing procedures, control procedures, specific names, and various types of data and parameters shown in the drawings may be changed arbitrarily, unless otherwise specified.

[Program] In an embodiment, various devices constituting the inspection device 100 can be implemented by installing, on a desired computer, the above-described inspection program as package software or online software. For example, by executing the above-described inspection program on an information processing device, it is possible to cause the information processing device to function as various devices constituting the inspection device 100. The information processing device mentioned here includes a desktop or laptop computer. In addition, the category of the information processing device includes a mobile communication terminal such as a mobile phone and a slate device such as personal digital assistants (PDA).

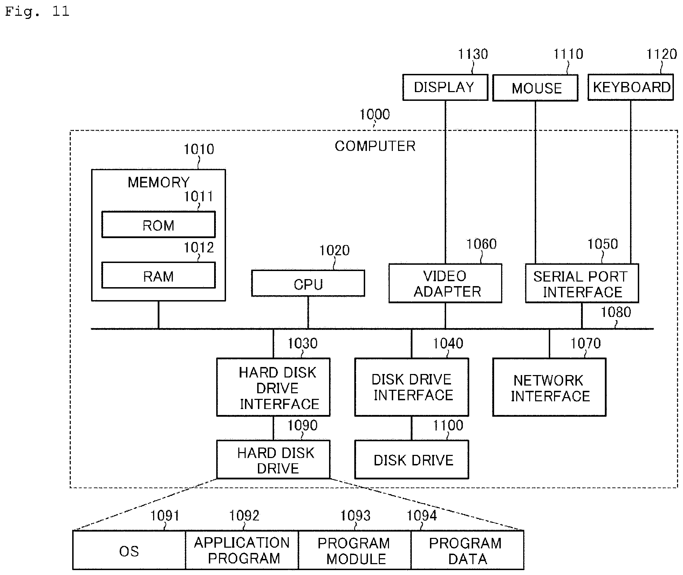

Fig. 11 is a diagram showing an example of a computer in which various devices constituting the inspection device 100 are realized. A computer 1000 includes, for example, a memory 1010 and a CPU 1020. Further, the computer 1000 also includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a RAM 1012. The ROM 1011 stores, for example, a boot program, such as a basic input output system (BIOS). The hard disk drive interface 1030 is connected to a hard disk drive 1090. The disk drive interface 1040 is connected to a disk drive 1100. For example, a detachable storage medium such as a magnetic disk or an optical disc is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, a program that defines each type of processing of various devices constituting the inspection device 100 is implemented as the program module 1093 in which code that is executable by the computer is described. The program module 1093 is stored in, for example, the hard disk drive 1090. For example, the program module 1093 for executing the same processing as functional configurations in the various devices constituting the inspection device 100 is stored in the hard disk drive 1090. The hard disk drive 1090 may be replaced with a solid state drive (SSD).

Furthermore, the setting data used in processing of the embodiment described above is stored as the program data 1094 in, for example, the memory 1010 or the hard disk drive 1090. Then, the CPU 1020 reads out the program module 1093 and the program data 1094 stored in the memory 1010 and the hard disk drive 1090 to the RAM 1012 as necessary, and executes the processing of the embodiment described above.

The program module 1093 and the program data 1094 are not limited to being stored in the hard disk drive 1090, and may be stored in, for example, a detachable storage medium and read by the CPU 1020 via the disk drive 1100 or the like. Alternatively, the program module 1093 and the program data 1094 may be stored in another computer connected via a network (a LAN, a wide area network (WAN), or the like). The program module 1093 and the program data 1094 may also be read out from the other computer by the CPU 1020 via the network interface 1070.

### [7. Others]

Although the present embodiment has been described above, the present embodiment is not limited by description and drawings that form a part of the disclosure. That is, all other embodiments, examples, operational techniques, and the like made by those skilled in the art on the basis of the present embodiment are included in the scope of the present embodiment.

### [Reference Signs List]

100 Inspection device
100A Inspection device
100B Inspection device
100C Inspection device
110 Communication unit
120 Storage unit
121 Configuration information storage unit
A Component
B Component
N Component
IA Component identification information
Ia Component identification information
IB Component identification information
IN Component identification information
122 Operation definition information storage unit
1 Operation definition information
1221 Component identification reference information
RA Component identification reference information
1222 Operation specification information
1222a Data processing specification information
1222b External input/output specification information
1222c Communication specification information
123 Operation data storage unit
124 Difference information storage unit
124a Information on presence/absence of difference
124b Information on content of difference
130 Control unit
131 Reception unit
132 Calculation unit
133 Identification unit
134 Output unit
135 Acquisition unit
200 External storage device
210 Communication unit
220 Storage unit
222 Operation definition information storage unit
2221 Component identification reference information
2222 Operation specification information
2222a Data processing specification information
2222b External input/output specification information
2222c Communication specification information
224 Difference information storage unit
224a Information on presence/absence of difference
224b Information on content of difference
230 Control unit
300 Terminal device
1000 Computer
1010 Memory
1011 ROM
1012 RAM
1020 CPU
1030 Hard disk drive interface
1040 Disk drive interface
1050 Serial port interface
1060 Video adapter
1070 Network interface
1080 Bus
1090 Hard disk drive
1091 OS
1092 Application program
1093 Program module
1094 Program data
1100 Disk drive
1110 Mouse
1120 Keyboard

## Claims

1. An inspection device comprising:
a calculation unit configured to calculate information on a difference on the basis of operation definition information including preset operation specifications of an apparatus or a system and operation data; and
an identification unit configured to identify the apparatus or the system which performs an operation different from the same kind of apparatuses or the same kind of systems on the basis of the information on the difference.

2. The inspection device according to claim 1, wherein the calculation unit compares the operation definition information in which configuration information including components with respect to a configuration of the apparatus or the system is associated with operation specifications based on the components with the operation data that is information on an actual operation of the apparatus or the system, and calculates, as the information on the difference, information on presence/absence of a difference between the operation specifications and the operation data and information on content of a difference between the operation specifications and the operation data.

3. The inspection device according to claim 1 or 2, wherein the identification unit identifies a component that causes the difference using previously acquired information on differences in the same kind of apparatuses or the same kind of systems as the apparatus or the system.

4. The inspection device according to claim 1, further comprising an acquisition unit configured to acquire the operation definition information from a predetermined external storage device.

5. The inspection device according to claim 1, further comprising an acquisition unit configured to acquire the information on the difference from a predetermined external storage device.

6. The inspection device according to claim 1 or 5, further comprising an update unit configured to update the operation definition information when the information on the difference calculated by the calculation unit and the information on differences in the same kind of apparatuses or the same kind of systems as the apparatus or the system satisfy predetermined conditions.

7. An inspection method executed by an inspection device, comprising:
a calculation process of calculating information on a difference on the basis of operation definition information including preset operation specifications of an apparatus or a system and operation data; and
an identification process of identifying the apparatus or the system which performs an operation different from the same kind of apparatuses or the same kind of systems on the basis of the information on the difference.

8. An inspection program causing a computer to execute:
a calculation step of calculating information on a difference on the basis of operation definition information including preset operation specifications of an apparatus or a system and operation data; and
an identification step of identifying the apparatus or the system which performs an operation different from the same kind of apparatuses or the same kind of systems on the basis of the information on the difference.
